# FASCICULE DE BREVET EUROPEEN

(11) **EP 2 964 906 B1**
(45) Date de publication et mention de la délivrance du brevet: **04.01.2017**
(21) Numéro de dépôt: 14715041.1
(22) Date de dépôt: 07.03.2014
(51) Int. Cl.: F01D 25/24, B64D 33/02, F02C 7/14, F01D 25/12

(54) **NACELLE ÉQUIPÉE D'UN CIRCUIT DE REFROIDISSEMENT D'HUILE À ÉCHANGEUR INTERMÉDIAIRE**
TRIEBWERKSGONDEL MIT EINER ÖLKÜHLUNGSSCHALTUNG UND EINEM ZWISCHENWÄRMETAUSCHER
NACELLE EQUIPPED WITH AN OIL-COOLING CIRCUIT COMPRISING AN INTERMEDIATE HEAT EXCHANGER

(30) Priorité: 07.03.2013 FR 1352069
(43) Date de publication de la demande: 13.01.2016
(73) Titulaire: Aircelle, 76700 Gonfreville L'Orcher (FR)
(72) Inventeur: CARUEL, Pierre, F-76600 Le Havre (FR)
(74) Mandataire: Gaillarde, Frédéric F. Ch.
(86) Numéro de dépôt international: PCT/FR2014/050520
(87) Numéro de publication internationale: WO 2014/135812

(56) Documents cités:
- EP-A2- 1 479 889
- FR-A1- 2 958 974
- GB-A- 2 204 361
- "The Jet Engine", 1 janvier 1986 (1986-01-01), JET ENGINE (ROLLS-ROYCE), DERBY, ROLLS ROYCE PLC, GB, PAGE(S) 147 - 151, XP002310532, ISBN: 978-0-902121-23-2 figures 13-3

## Description

La présente invention se rapporte à une nacelle de turbomoteur équipée d'un système de refroidissement d'huile moteur.

Un avion est propulsé par un ou plusieurs ensembles propulsifs comprenant chacun un turbomoteur logé dans une nacelle tubulaire. Chaque ensemble propulsif est rattaché à l'avion par un mât situé généralement sous ou sur une aile ou au niveau du fuselage.

On entend par amont ce qui vient avant le point ou élément considéré, dans le sens de l'écoulement de l'air dans un turbomoteur, et par aval ce qui vient après le point ou élément considéré, dans le sens de l'écoulement de l'air dans le turbomoteur.

Une nacelle présente généralement une structure comprenant une entrée d'air en amont du moteur, une section médiane destinée à entourer une soufflante ou les compresseurs du turbomoteur et son carter, une section aval pouvant abriter des moyens d'inversion de poussée et destinée à entourer le générateur de gaz du turbomoteur, et est généralement terminée par une tuyère d'éjection dont la sortie est située en aval du turbomoteur.

Classiquement, l'espace compris entre la nacelle et le turbomoteur s'appelle veine secondaire.

De manière générale, le turbomoteur comprend un ensemble de pales (compresseur et éventuellement soufflante ou hélice non carénée) entraînées en rotation par un générateur de gaz à travers un ensemble de moyens de transmission.

Un système de distribution de lubrifiant est prévu pour assurer une bonne lubrification de ces moyens de transmission et de tout autre accessoire comme les générateurs électriques, et les refroidir.

Par voie de conséquence, le lubrifiant doit ensuite également être refroidi par un échangeur de chaleur.

Pour ce faire, une première méthode connue consiste à refroidir le lubrifiant par circulation à travers un échangeur air / huile utilisant de l'air prélevé dans une veine secondaire (flux dit froid) de la nacelle ou d'un des premiers étages de compresseur.

Le prélèvement et la circulation d'air au travers de cet échangeur perturbe l'écoulement du flux d'air et entraîne une perte de poussée du moteur, ce qui n'est pas souhaitable.

Il a notamment été calculé que dans le cas d'un moteur à soufflante à réducteur, cela pouvait représenter des pertes équivalentes à 1% de consommation de carburant.

Une autre solution est apparue dans le cadre des systèmes de dégivrage de la nacelle.

En effet, en vol, selon les conditions de température et d'humidité, de la glace peut se former sur la nacelle, notamment au niveau de la surface externe de la lèvre d'entrée d'air équipant la section d'entrée d'air.

La présence de glace ou de givre modifie les propriétés aérodynamiques de l'entrée d'air et perturbe l'acheminement de l'air vers la soufflante. De plus, la formation de givre sur l'entrée d'air de la nacelle et l'ingestion de glace par le moteur en cas de détachement de blocs de glace peuvent endommager le moteur ou la voilure, et présenter un risque pour la sécurité du vol.

Une autre solution pour dégivrer la surface externe de la nacelle consiste à éviter que de la glace ne se forme sur cette surface externe en maintenant la surface concernée à une température suffisante.

Ainsi, la chaleur du lubrifiant peut être utilisée pour réchauffer les surfaces externes de la nacelle, le lubrifiant étant de ce fait refroidi et en mesure d'être réutilisé dans le circuit de lubrification.

Les documents US4782658 et EP1479889 notamment, décrivent la mise en oeuvre de tels systèmes de dégivrage utilisant la chaleur du lubrifiant moteur.

Plus précisément, le document US4782658 décrit un système de dégivrage utilisant de l'air extérieur prélevé par une écope et réchauffé au travers d'un échangeur air / huile pour servir au dégivrage. Un tel système permet un meilleur contrôle des énergies thermiques échangées, mais la présence d'écopes dans la surface externe de la nacelle entraîne une perte des performances aérodynamiques.

Le document EP1479889 décrit quant à lui un système de dégivrage d'une structure d'entrée d'air de nacelle de turboréacteur utilisant un échangeur air / huile en circuit fermé, l'air intérieur réchauffé de la structure d'entrée d'air étant mis en convection forcée par un ventilateur.

Il convient de noter que la structure d'entrée d'air est creuse et forme une chambre fermée de circulation d'air de dégivrage réchauffé par l'échangeur disposé à l'intérieur de cette chambre.

Ainsi, l'énergie thermique disponible pour le dégivrage dépend de la température du lubrifiant.

En outre, la surface d'échange de la structure d'entrée d'air est fixe et limitée et l'énergie réellement dissipée dépend essentiellement de la chaleur nécessaire au dégivrage et donc des conditions extérieures.

Il s'ensuit que le refroidissement du lubrifiant, ainsi que la température à laquelle est maintenue l'entrée d'air, sont difficilement contrôlables.

Il existe une autre solution dans laquelle sont associés un échangeur de chaleur et des conduits de circulation d'un fluide à réchauffer de manière à former plusieurs boucles de recirculation du fluide à réchauffer à travers l'échangeur, et de telle façon qu'une zone de circulation du fluide à réchauffer soit en contact avec une paroi externe de manière à permettre un échange de chaleur par conduction avec l'air extérieur de la nacelle. La circulation du fluide à réchauffer se fait par circulation forcée.

Il a été constaté que des systèmes tels que précédemment présentés provoquent des pertes de charge dans la veine secondaire dues à la présence de l'échangeur, et des pertes de poussée moteur quand est effectué un prélèvement d'air dans la veine secondaire où ces pertes ont un impact important sur la consommation (elles représentent environ 0.5% de la consommation totale), mais aussi que de tels systèmes présentent une mauvaise efficacité lorsque le turbomoteur tourne au ralenti et / ou à faible vitesse (par exemple pendant la phase de roulage au sol de l'avion) dans le cas où le refroidissement de l'huile moteur implique un prélèvement d'air provenant de l'extérieur de la nacelle..

La présente invention vise à fournir un dispositif affranchi des inconvénients précités.

A cet effet, la présente invention a pour objet une nacelle d'aéronef comprenant : une paroi aérodynamique externe comprenant une lèvre d'entrée d'air amont, une paroi aérodynamique interne, la lèvre d'entrée d'air reliant en amont les deux parois aérodynamiques externe et interne, une cloison avant située immédiatement à l'aval de la lèvre et reliant les deux parois aérodynamiques externe et interne, un réseau de circulation d'un premier fluide de refroidissement d'un second fluide comprenant au moins deux échangeurs de chaleur de type air / huile et au moins un échangeur de type air / air, remarquable en ce que le réseau (1) de circulation comprend au moins une écope dynamique (112) de prélèvement d'air venant de l'extérieur de la nacelle (100), au moins un orifice (121) de prélèvement d'air froid venant d'une soufflante (130) et au moins un orifice de sortie (113) d'air hors de la nacelle (100).

La lèvre d'entrée d'air peut être intégrée ou non à la paroi aérodynamique externe de la nacelle d'aéronef.

Selon d'autres caractéristiques de l'invention, la nacelle comporte l'une ou plusieurs des caractéristiques optionnelles suivantes considérées seules ou selon toutes les combinaisons possibles :
- l'échangeur de type air / air est situé, au regard du parcours du premier fluide, entre les deux échangeurs de chaleur de type air / huile ;
- l'échangeur de type air / air est un échangeur surfacique présentant une surface d'échange ;
- la surface d'échange est réalisée à partir de la paroi aérodynamique externe de la nacelle ;
- l'échangeur de type air / air comprend une paroi intermédiaire percée d'une pluralité d'orifices ;
- l'échangeur de type air / air présente un espace confiné, comprenant une entrée et une sortie du premier fluide, enfermé par des parois comprenant la surface d'échange et une paroi périphérique ;
- l'espace confiné est situé dans la lèvre d'entrée d'air ;
- la nacelle comprend au moins un moyen commandé de prélèvement d'air chaud venant d'un compresseur de l'aéronef de manière à permettre l'alimentation en air chaud de la lèvre d'entrée d'air ;
- la nacelle comprend au moins un injecteur haute pression commandé de manière à injecter de l'air chaud venant du moyen commandé de prélèvement d'air chaud dans la lèvre d'entrée d'air ;
- la paroi aérodynamique externe comprend au moins un orifice de sortie du premier fluide réchauffé hors de la nacelle après avoir traversé le réseau.

Cette solution permet d'optimiser le refroidissement du second fluide tout en minimisant les pertes de charges de la nacelle, elle permet dans certains cas de dégivrer en plus la lèvre d'entrée d'air. En effet, la pression prélevée à l'extérieur, à forte vitesse, est suffisante pour alimenter les deux échangeurs de type air / huile en série, l'échangeur de type air / air permet d'abaisser la température à l'entrée du second échangeur dans lequel l'air pénètre. À faible vitesse, la pression prélevée depuis la soufflante permet de n'alimenter qu'un seul des deux échangeurs, ceux-ci sont alors alimentés en parallèle. Comparé à une solution connue de l'homme du métier où les deux échangeurs fonctionneraient toujours en parallèle y compris à forte vitesse avion, la solution proposée permet de diviser par deux le débit d'air prélevé et donc de diviser par deux les pertes liées au refroidissement de l'huile.

La solution permet de réduire la consommation globale de l'aéronef de 0,25% à 0,4% par rapport à un refroidissement par prélèvement uniquement dans la veine secondaire. Dans les cas où elle permet de dégivrer la lèvre d'entrée d'air, elle permet alors de réduire la température vue par la lèvre d'entrée d'air, réduisant ainsi les problèmes récurrents de fatigue, et par la zone amont de la paroi aérodynamique externe, la température de la dite zone ne dépassant alors pas la température maximale de l'huile d'une turbomachine, typiquement 180°C, ce qui permet de réaliser une cloison avant de lèvre d'entrée d'air en aluminium plutôt qu'en titane.

On décrit à présent, à titre d'exemple non limitatif, plusieurs modes de réalisation possibles de l'invention, en référence aux figures annexées ; sur l'ensemble des figures, des références identiques ou analogues désignent des organes ou ensembles d'organes identiques ou analogues :
- la figure 1 est une vue schématique d'un premier réseau de circulation du premier fluide selon un premier mode de réalisation de la présente invention,
- la figure 2 est une vue schématique du premier réseau explicitant une circulation du premier fluide au travers du réseau en cas de forte vitesse d'un avion,
- la figure 3 est une vue schématique du premier réseau explicitant une circulation du premier fluide au travers du réseau en cas de faible vitesse de l'avion,
- la figure 4 est une vue schématique d'un second réseau de circulation du premier fluide selon un second mode de réalisation de la présente invention,
- la figure 5 est une vue partielle en perspective d'une lèvre d'entrée d'air d'une nacelle d'avion dans laquelle est installée le second réseau,
- la figure 6 est une vue schématique du second réseau explicitant une circulation du premier fluide au travers du réseau en cas de forte vitesse de l'avion,
- la figure 7 est une vue schématique du second réseau explicitant une circulation du premier fluide au travers du réseau en cas de faible vitesse de l'avion,
- la figure 8 est une vue schématique du second réseau explicitant une circulation du premier fluide au travers du réseau en mode de dégivrage de la lèvre d'entrée d'air,
- la figure 9 est une vue schématique d'un troisième réseau de circulation du premier fluide selon un troisième mode de réalisation de la présente invention,
- la figure 10 est une vue schématique de la lèvre d'entrée d'air équipée d'un quatrième réseau de circulation du premier fluide selon un quatrième mode de réalisation de la présente invention,
- la figure 11 est une vue schématique du quatrième réseau de circulation du premier fluide selon le quatrième mode de réalisation de la présente invention,
- la figure 12 est une vue schématique du quatrième réseau explicitant une circulation du premier fluide au travers du réseau en cas de forte vitesse de l'avion,
- la figure 13 est une vue schématique du quatrième réseau explicitant une circulation du premier fluide au travers du réseau en cas de faible vitesse de l'avion,
- la figure 14 est une vue schématique du quatrième réseau explicitant une circulation du premier fluide au travers du réseau en mode de dégivrage de la lèvre d'entrée d'air,
- la figure 15 est une vue schématique du quatrième réseau explicitant le fonctionnement du réseau en cas de panne d'un ou plusieurs éléments de commande de la circulation du premier fluide au travers du réseau.

Dans tous les modes de réalisation décrits ci-après, le premier fluide est sensiblement constitué d'air, et le second fluide est sensiblement constitué d'une huile moteur choisie parmi celles couramment utilisées dans le domaine aéronautique. Toutefois, le premier fluide et le second fluide peuvent être constitués sensiblement par toutes autres matières qui conviendraient à leur utilisation conjointe dans le domaine aéronautique.

Dans tous les modes de réalisation décrits ci-après, et dans un souci de simplification, les canalisations reliant les différents éléments des différents réseaux 1 de circulation d'air sont appelées « canalisation 19 ».

Dans tous les modes de réalisation décrits ci-après, on entend par « traverser le réseau » traverser tout ou partie d'un réseau 1, on entend par vanne commandée une vanne tenant un rôle de robinet-vanne, actionneur ou non, on entend par écope dynamique une écope de préférence équipée d'au moins une vanne de régulation.

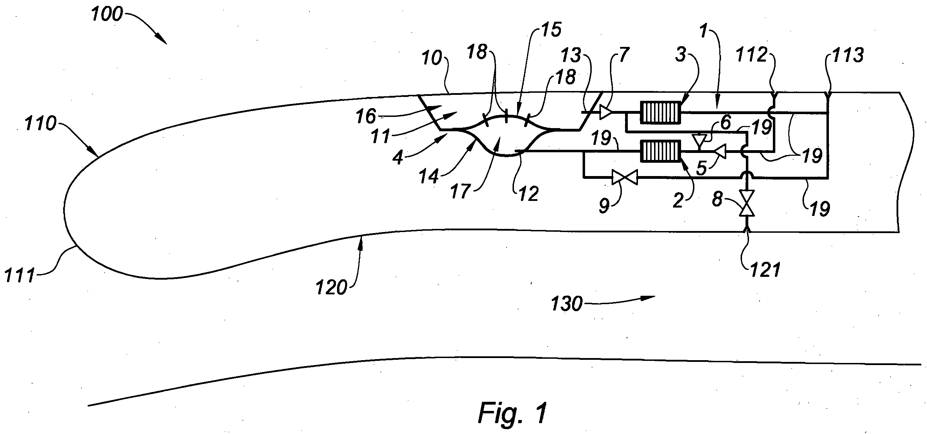

En référence à la figure 1, on décrit la structure du premier réseau 1 de circulation d'air selon le premier mode de réalisation de la présente invention.

Le premier réseau 1 est compris dans une nacelle 100 d'avion.

La nacelle 100 comprend une paroi aérodynamique externe 110 comprenant une lèvre d'entrée d'air 111 amont, une paroi aérodynamique interne 120, la lèvre d'entrée d'air 111 reliant en amont les deux parois aérodynamiques externe 110 et interne 120.

Le premier réseau 1 de circulation d'air pour le refroidissement d'huile moteur comprend deux échangeurs de chaleur air / huile (respectivement 2 et 3), et un échangeur air / air 4.

Le premier réseau 1 comprend des vannes anti-retour n'autorisant la circulation de l'air que dans un sens (respectivement 5, 6, et 7), des vannes commandées (respectivement 8 et 9), et la canalisation 19.Les vannes 5, 6, 7, 8 et 9 servent à contrôler la circulation de l'air dans le premier réseau 1.

L'échangeur air / air 4 est un échangeur surfacique présentant une surface d'échange 10 réalisée à partir de la paroi aérodynamique externe 110 de la nacelle 100. L'échangeur air / air 4 comprend aussi un espace confiné 11, comprenant une entrée d'air 12 et une sortie d'air 13 du premier fluide, enfermé par la surface d'échange 10 et une paroi périphérique 14. L'échangeur air / air 4 comprend aussi une paroi intermédiaire 15 divisant l'espace confiné 11 en deux volumes de telle manière que son plan moyen soit sensiblement parallèle au plan moyen de la surface d'échange 10, et que l'un des volumes, dit volume supérieur 16, est délimité par la surface d'échange 10, la paroi périphérique 14 et la paroi intermédiaire 15, et l'autre des volumes, dit volume inférieur 17, est délimité par la paroi périphérique 14 et la paroi intermédiaire 15. La paroi intermédiaire 15 est percée d'une pluralité d'orifices 18. Le volume inférieur 17 communique avec l'entrée d'air 12, et le volume supérieur 16 communique avec la sortie d'air 13.

L'échangeur air / air 4 peut aussi ne comprendre qu'une surface d'échange 10 au contact de laquelle vient une canalisation 19 du premier circuit 1 afin de refroidir l'air circulant dans le premier réseau 1 et sortant de l'échangeur air / huile 2 afin de pénétrer refroidi dans l'échangeur air / huile 3.

La paroi aérodynamique externe 110 de la nacelle comprend une écope dynamique 112 de prélèvement d'air venant de l'extérieur de la nacelle ainsi qu'un orifice de sortie 113 d'air réchauffé hors de la nacelle 100 après avoir traversé le premier réseau 1.

La paroi aérodynamique interne 120 comprend un orifice 121 de prélèvement d'air froid venant d'une soufflante 130 de l'aéronef à l'aide de la vanne commandée 8 du premier réseau 1, dit prélèvement soufflante 121.

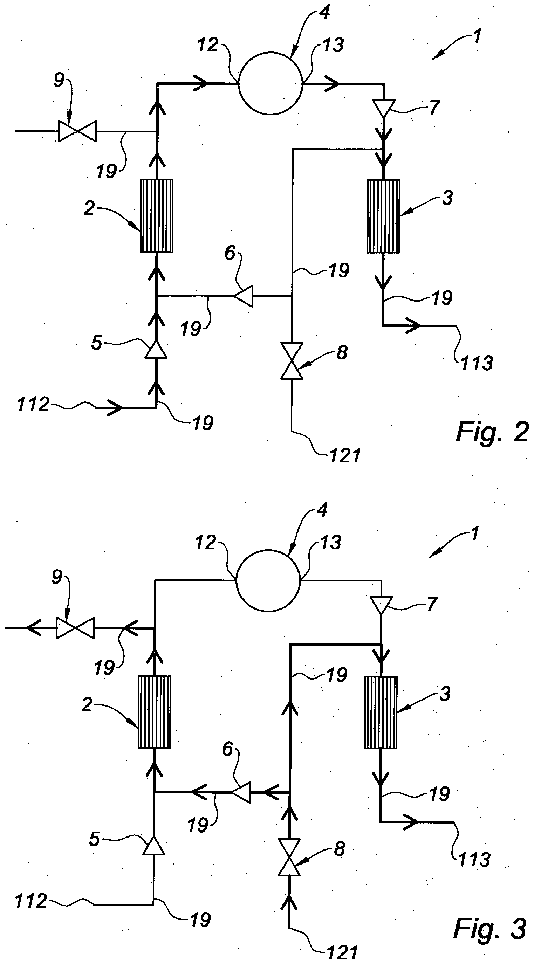

En référence à la figure 2, on décrit le fonctionnement du premier réseau 1 en cas de forte vitesse de l'avion.

Les vannes commandées 8 et 9 sont fermées ainsi que la vanne anti-retour 6.

L'air pénètre par l'écope dynamique 112 de la paroi aérodynamique externe 110 dans la canalisation 19 du premier réseau 1. L'air prélevé par l'écope dynamique 112 vient de l'extérieur de la nacelle 100, il est donc froid.

Puis l'air passe par la vanne anti-retour 5 du premier réseau 1, la canalisation 19, l'échangeur air / huile 2 où il récupère la chaleur de l'huile, il pénètre ensuite dans l'échangeur air / air 4 par l'entrée d'air 12.

Dans l'échangeur air / air 4, l'air circule depuis l'entrée d'air 12 dans le volume inférieur 17 et traverse la paroi intermédiaire 15 par les orifices 18 pour atteindre le volume supérieur 16. Dans le volume supérieur 16 l'air, en circulant, entre en contact avec la surface d'échange 10 qui est une surface d'échange thermique par impact ou circulation simple des fluides. A ce stade, l'air à l'extérieur de la nacelle 100 est froid et refroidit donc la surface d'échange 10, qui elle-même refroidit l'air se trouvant dans le volume supérieur 16.

Puis l'air refroidi circulant dans le volume supérieur 16 pénètre dans la canalisation 19 par la sortie d'air 13 cette fois, et passe successivement par la vanne anti-retour 7, l'échangeur air / huile 3 où il récupère la chaleur de l'huile pour enfin sortir de la nacelle 100 par l'orifice de sortie 113 de la nacelle 100.

En référence à la figure 3, on décrit le fonctionnement du premier réseau 1 en cas de faible vitesse de l'avion.

Dans ce cas, l'air est prélevé dans la soufflante 130 de la nacelle 100, il est donc aussi froid.

Les vannes anti-retour 5 et 7 sont fermées.

L'air pénètre par le prélèvement soufflante 121 de la paroi aérodynamique interne 120 dans la canalisation 19 du premier réseau 1, et passe par la vanne commandée 8, électrique ou pneumatique. A ce stade, la canalisation 19 se dédouble pour diviser le débit d'air en deux, une première partie de l'air ayant passé la vanne commandée se dirige alors vers l'échangeur air / huile 2 tandis qu'une deuxième partie se dirige vers l'échangeur air / huile 3.

Avant d'atteindre l'échangeur air / huile 2, la première partie de l'air passe par une vanne anti-retour 6, une fois que l'air a pénétré dans l'échangeur air / huile 2, il se dirige vers l'orifice de sortie 113 de la paroi aérodynamique externe 110 après passage par la vanne commandée 9.

La deuxième partie de l'air pénètre directement dans l'échangeur air / huile 3 pour ensuite se diriger vers l'orifice de sortie 113.

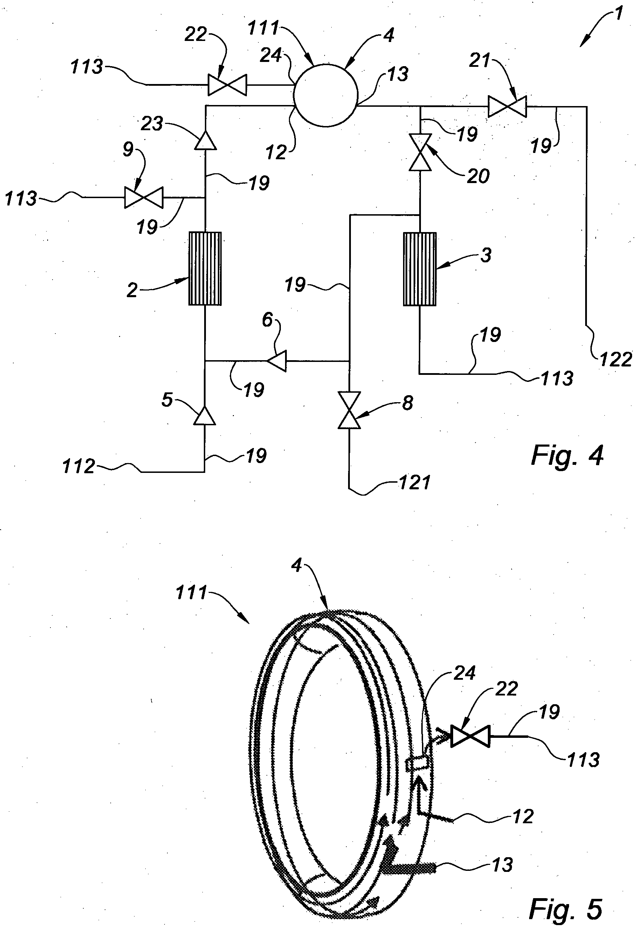

En référence à la figure 4, on décrit la structure du second réseau 1 de circulation d'air selon le second mode de réalisation de la présente invention.

Dans ce mode de réalisation, la lèvre d'entrée d'air 111 joue le rôle d'échangeur air / air 4.

Le second réseau 1 comprend cinq vannes commandées 8, 9, 20, 21 et 22 ; trois vannes anti-retour 5, 6 et 23 ; deux échangeurs air / huile 2 et 3 ; un échangeur air / air 4.

La nacelle 100 comprend un moyen de prélèvement d'air chaud venant d'un compresseur de l'aéronef, dit prélèvement compresseur 122, de manière à permettre l'alimentation en air chaud de la lèvre d'entrée d'air 111.Le prélèvement compresseur 122 est connecté à la vanne commandée 21 qui elle-même est directement connectée à l'échangeur air / air 4 via l'orifice 13.

L'échangeur air / air 4 comprend trois orifices d'entrée et de sortie d'air, un orifice de sortie 24 d'air donnant directement sur l'orifice de sortie 113 de la nacelle 100 via la vanne commandée 22, un autre orifice est l'orifice 13 donnant sur l'échangeur air / huile 3, servant alors de sortie d'air, et sur le prélèvement compresseur 122 via la vanne commandée 21, servant alors d'entrée d'air chaud venant du compresseur (non représenté). Le troisième orifice est l'entrée d'air 12 d'air venant de l'échangeur air / huile 2.

L'échangeur air / air 4 fonctionne sensiblement de la même manière que celui décrit dans le mode de réalisation précédent (premier réseau 1).

En référence à la figure 5, on décrit la lèvre d'entrée d'air 111 de la nacelle 100 dans laquelle est installé le second réseau 1 de circulation d'air.

La lèvre d'entrée d'air 111 fait office d'échangeur air / air 4. L'air y pénètre par l'orifice 13 ou par l'entrée d'air 12 et en ressort par l'orifice de sortie 24 ou par l'orifice 13 selon le mode de fonctionnement du second réseau 1.

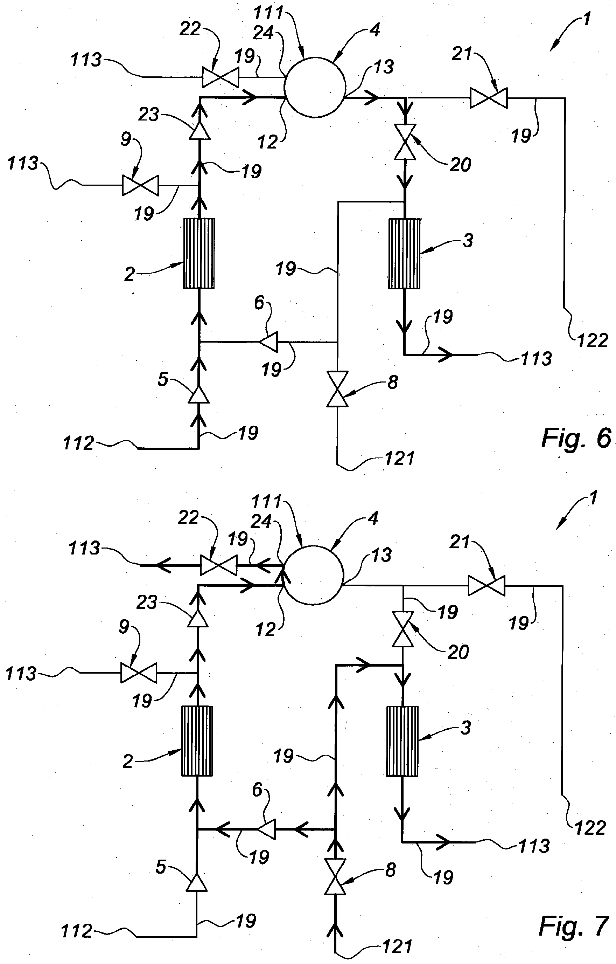

En référence à la figure 6, on décrit le fonctionnement du second réseau 1 en cas de forte vitesse de l'avion.

Les vannes commandées 8, 9, 21 et 22 sont fermées, ainsi que la vanne anti-retour 6.

L'air pénètre par l'écope dynamique 112 dans la canalisation 19 ; venant de l'extérieur de la nacelle 100, l'air est donc froid.

Puis l'air passe successivement par la vanne anti-retour 5, l'échangeur air / huile 2 où il se réchauffe de la chaleur émise par l'huile moteur, la vanne anti-retour 23, l'entrée d'air 12 l'échangeur air / air 4 où il se refroidit, l'orifice 13, la vanne commandée 20, l'échangeur air / huile 3 où il se réchauffe de la chaleur émise par l'huile moteur, et l'orifice de sortie 113 de la paroi aérodynamique externe 110 de la nacelle 100.

En référence à la figure 7, on décrit le fonctionnement du second réseau 1 en cas de faible vitesse de l'avion.

Les vannes commandées 9, 20 et 21 sont fermées ainsi que la vanne anti-retour 5.

L'air pénètre par le prélèvement soufflante 121 dans la canalisation 19, venant de la soufflante, l'air est donc froid, puis il passe par la vanne commandée 8.

A ce stade, la canalisation 19 se dédouble pour diviser le débit d'air en deux, une première partie de l'air ayant passé la vanne commandée 8 se dirige alors vers l'échangeur air / huile 2 tandis qu'une deuxième partie se dirige vers l'échangeur air / huile 3.

Avant d'atteindre l'échangeur air / huile 2, la première partie de l'air passe par la vanne anti-retour 6, une fois que l'air a pénétré dans l'échangeur air / huile 2, il se réchauffe et passe ensuite par la vanne anti-retour 23, pénètre dans l'échangeur air / air 4 par l'entrée d'air 12 pour être immédiatement évacué par l'orifice de sortie 24 vers l'orifice de sortie 113 de la paroi aérodynamique externe 110 en passant par la vanne commandée 22.

La deuxième partie de l'air pénètre directement dans l'échangeur air / huile 3, s'y réchauffe, pour ensuite être évacué par l'orifice de sortie 113.

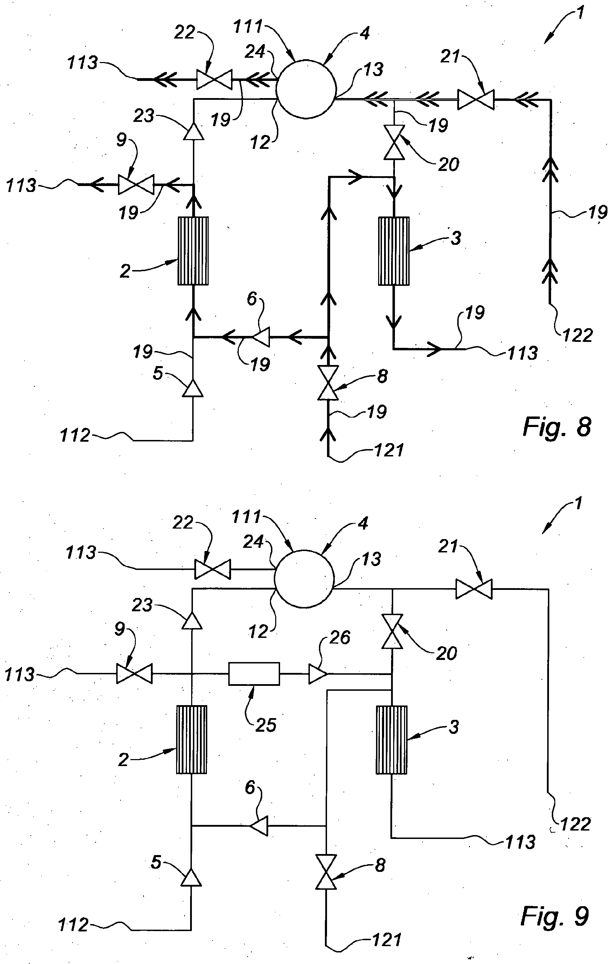

En référence à la figure 8, on décrit le fonctionnement du second réseau 1 en mode de dégivrage de la lèvre d'entrée d'air 111 de la nacelle 100.

La vanne commandée 20 est fermée ainsi que les vannes anti-retour 5 et 23.

De l'air pénètre par le prélèvement soufflante 121 dans la canalisation 19, venant de la soufflante, l'air est donc froid, puis il passe par la vanne commandée 8.

A ce stade, la canalisation 19 se dédouble pour diviser le débit d'air en deux, une première partie de l'air ayant passé la vanne commandée 8 se dirige alors vers l'échangeur air / huile 2 tandis qu'une deuxième partie se dirige vers l'échangeur air / huile 3.

Avant d'atteindre l'échangeur air / huile 2, la première partie de l'air passe par une vanne anti-retour 6, une fois que l'air a pénétré dans l'échangeur air / huile 2, il se réchauffe et est ensuite évacué vers l'orifice de sortie 113 en passant par la vanne commandée 9.

La deuxième partie de l'air pénètre directement dans l'échangeur air / huile 3, s'y réchauffe, pour ensuite évacué par l'orifice de sortie 113.

Ainsi, l'huile moteur passant par les échangeurs air / huile 2 et 3 est refroidie.

En parallèle, de l'air pénètre par le prélèvement compresseur 122 dans la canalisation 19 du second réseau 1 ; venant du compresseur, l'air est donc chaud et sous haute pression. Cet air passe ensuite par la vanne commandée 21 pour ensuite se diriger directement vers l'orifice 13 et être injecté sous haute pression dans la lèvre d'entrée d'air 111 faisant office d'échangeur air / air 4. L'air ainsi injecté sous haute pression effectue plusieurs révolutions le long de la circonférence de la lèvre d'entrée d'air 111 pour dégivrer l'ensemble de la lèvre d'entrée d'air 111, puis il est évacué vers l'orifice de sortie 113 en passant par la vanne commandée 22.

En référence à la figure 9, on décrit le troisième réseau 1 de circulation de l'air selon le troisième mode de réalisation de la présente invention.

Le troisième réseau 1 présente la même structure que le second réseau (Fig. 4, 5, 6, 8) dans laquelle est rajouté un deuxième échangeur air / air 25 ainsi qu'une vanne anti-retour 26 supplémentaire.

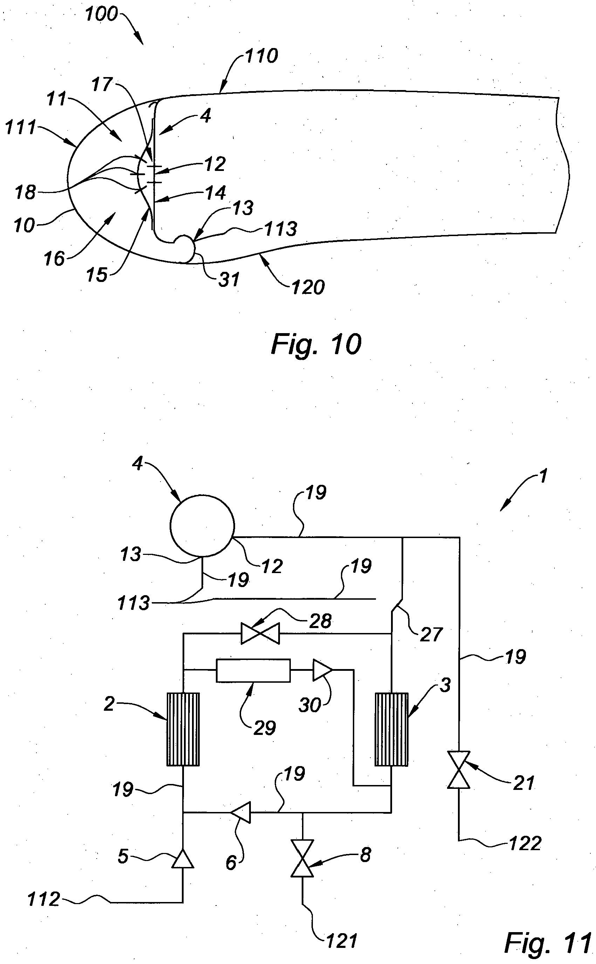

En référence à la figure 10, on décrit une lèvre d'entrée d'air 111 d'une paroi aérodynamique externe 110 d'une nacelle 100 dans laquelle est installée un échangeur air / air 4.

L'échangeur air / air 4 de la figure 10 est réalisé sur le même principe que celui de la figure 1. En effet, il comprend la surface d'échange 10 et la paroi périphérique 14, ou cloison avant de la lèvre d'entrée d'air111 délimitant un espace confiné 11, la paroi intermédiaire 15 divisant cet espace confiné en deux parties, le volume supérieur 16 et le volume inférieur 17, la paroi intermédiaire 15 est percée d'une pluralité d'orifices 18. Le volume inférieur 17 communique avec l'entrée d'air 12, et le volume supérieur 16 communique avec la sortie d'air 13.

L'échangeur air / air 4 comporte une différence par rapport à celui de la figure 1, il comprend un collecteur 31 dont le rôle est de récupérer l'air compris dans le volume supérieur 16 de l'échangeur air / air 4 afin de le diriger vers l'orifice de sortie 113 de la nacelle 100.

En référence à la figure 11, on décrit la structure du quatrième réseau 1 de circulation d'air équipant la lèvre d'entrée d'air 111.

Le quatrième réseau 1 comprend trois vannes commandées 8, 21 et 28, trois vannes anti-retour 5, 6 et 30, une vanne deux positions 27, deux échangeurs air / huile 2 et 3, et deux échangeurs air / air 4 et 29.

La nacelle 100 comprend le prélèvement compresseur 122 connecté à la vanne commandée 21 elle-même connectée à l'entrée d'air 12 de l'échangeur air / air 4, le prélèvement soufflante 121 connecté à la vanne commandée 8, l'écope dynamique 112 et l'orifice de sortie 113.

Le collecteur 31 étant compris dans l'échangeur air / air, il n'est pas représenté ici, mais il donne sur la sortie d'air 13 qui elle-même donne sur l'orifice de sortie 113 de la nacelle.

La vanne deux positions 27 permet d'orienter le flux d'air venant des échangeurs air / huile 2 et 3 alternativement vers deux directions différentes, l'une donnant directement sur l'orifice de sortie 113 de la nacelle 100, l'autre donnant directement sur l'échangeur air / air 4.

L'échangeur air / air 29 peut être installé dans la nacelle 100 de la même manière qu'explicitée sur la figure 1.

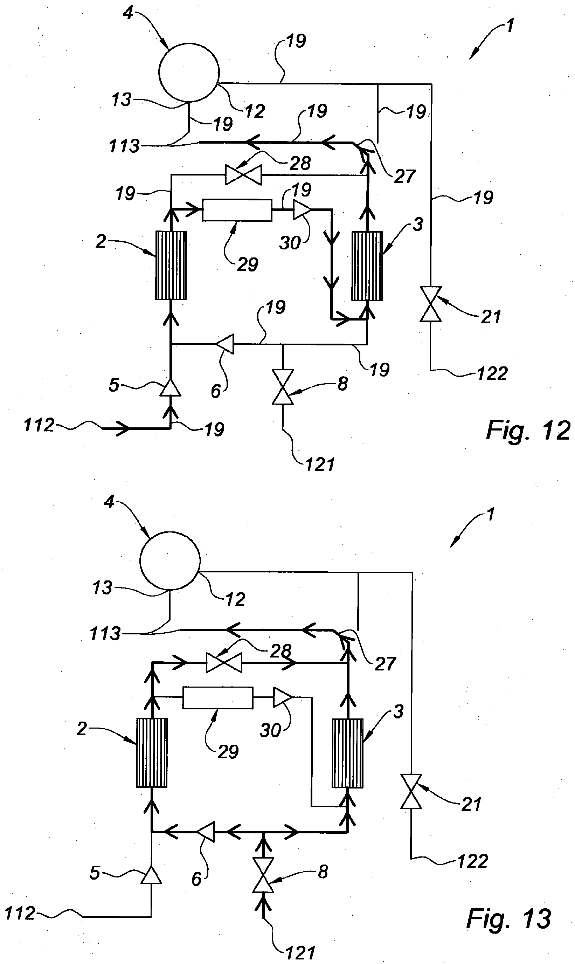

En référence à la figure 12, on décrit le fonctionnement du quatrième réseau 1 en cas de forte vitesse de l'avion.

Les vannes commandées 8, 21 et 28 sont fermées, la vanne anti-retour 6 est fermée, et la vanne deux positions 27 oriente le flux d'air directement vers l'orifice de sortie 113.

L'air pénètre dans le quatrième réseau 1 par l'écope dynamique 112 de la nacelle 100, puis il passe successivement par la vanne anti-retour 5, l'échangeur air / huile 2 où il se réchauffe, l'échangeur air / air 29 où il se refroidit, la vanne anti-retour 30, l'échangeur air / huile 3 où il se réchauffe, puis il se dirige directement vers l'orifice de sortie 113 en passant par la vanne deux positions 27 positionnée à cet effet.

Ainsi, l'huile moteur passant par les échangeurs air / huile 2 et 3 est refroidie.

Ce fonctionnement du quatrième réseau 1 au regard de la circulation de l'air en son sein est sensiblement similaire à celui du premier réseau explicité dans la figure 2.

En référence à la figure 13, on décrit le fonctionnement du quatrième réseau 1 en cas de faible vitesse de l'avion.

Dans ce cas, la vanne commandée 21 est fermée, les vannes anti-retour 5 et 30 sont fermées, et la vanne deux positions 27 oriente le flux d'air directement vers l'orifice de sortie 113.

L'air pénètre par le prélèvement soufflante 121 dans la canalisation 19, venant de la soufflante, l'air est donc froid, puis il passe par la vanne commandée 8.

A ce stade, la canalisation 19 se dédouble pour diviser le débit d'air en deux, une première partie de l'air ayant passé la vanne commandée 8 se dirige alors vers l'échangeur air / huile 2 tandis qu'une deuxième partie se dirige vers l'échangeur air / huile 3.

Avant d'atteindre l'échangeur air / huile 2, la première partie de l'air passe par la vanne anti-retour 6, une fois que l'air a pénétré dans l'échangeur air / huile 2, il se réchauffe et passe ensuite par la vanne commandée 28 pour être immédiatement évacué via la vanne deux positions 27 vers l'orifice de sortie 113.

La deuxième partie de l'air pénètre directement dans l'échangeur air / huile 3, s'y réchauffe, pour ensuite être évacué par l'orifice de sortie 113 via la vanne deux positions 27.

Ainsi, l'huile moteur passant par les échangeurs air / huile 2 et 3 est refroidie.

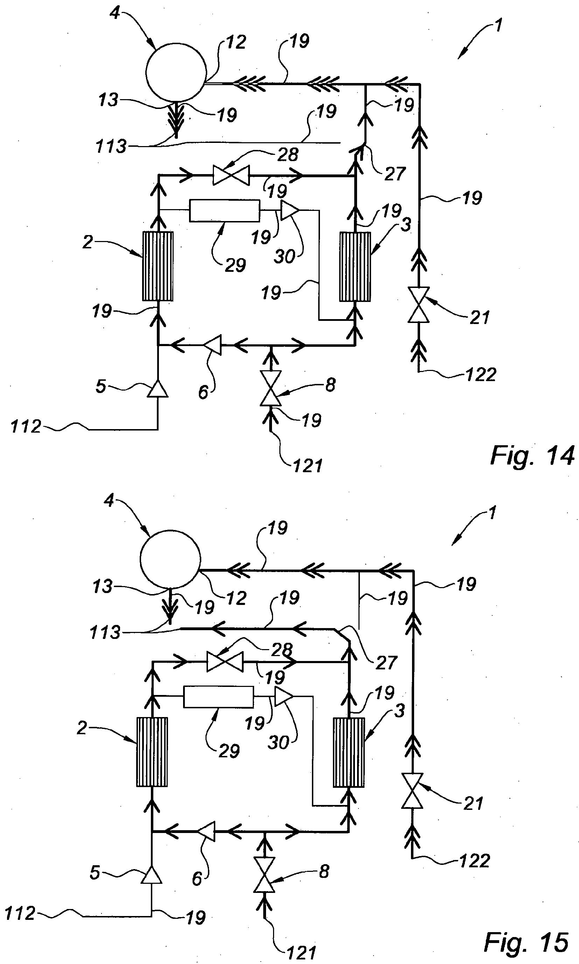

En référence à la figure 14, on décrit le fonctionnement du quatrième circuit 1 en mode de dégivrage de la lèvre d'entrée d'air 111 de la nacelle 100.

Les vannes anti-retour 5 et 30 sont fermées, la vanne deux positions 27 oriente le flux d'air directement vers l'échangeur air / air 4.

L'air pénètre par le prélèvement soufflante 121 dans la canalisation 19, venant de la soufflante, l'air est donc froid, puis il passe par la vanne commandée 8.

A ce stade, la canalisation 19 se dédouble pour diviser le débit d'air en deux, une première partie de l'air ayant passé la vanne commandée 8 se dirige alors vers l'échangeur air / huile 2 tandis qu'une deuxième partie se dirige vers l'échangeur air / huile 3.

Avant d'atteindre l'échangeur air / huile 2, la première partie de l'air passe par la vanne anti-retour 6, une fois que l'air a pénétré dans l'échangeur air / huile 2, il se réchauffe et passe ensuite par la vanne commandée 28 pour être immédiatement dirigé via la vanne deux positions 27 vers l'échangeur air / air 4.

La deuxième partie de l'air pénètre directement dans l'échangeur air / huile 3, s'y réchauffe, pour ensuite être dirigé vers l'échangeur air / air 4 via la vanne deux positions 27.

Ainsi, l'huile moteur passant par les échangeurs air / huile 2 et 3 est refroidie.

En parallèle, de l'air pénètre par le prélèvement compresseur 122 dans la canalisation 19 du quatrième réseau 1 ; venant du compresseur, l'air est donc chaud et sous haute pression. Cet air passe ensuite par la vanne commandée 21 pour ensuite se diriger directement vers l'entrée d'air 12.

A ce stade, l'air provenant du compresseur et celui provenant des échangeurs air / huile 2 et 3 se rejoignent dans la canalisation 19, le nouveau débit d'air formé atteint alors l'entrée d'air 12. L'air est ensuite injecté sous haute pression dans la lèvre d'entrée d'air 111 faisant office d'échangeur air / air 4. L'air ainsi injecté sous haute pression effectue alors plusieurs révolutions le long de la circonférence de la lèvre d'entrée d'air 111 pour dégivrer l'ensemble de la lèvre d'entrée d'air 111, puis il est évacué vers l'orifice de sortie 113 en passant par le collecteur 31 puis la sortie d'air 13.

En référence à la figure 15, on décrit le fonctionnement du quatrième réseau 1 en cas de panne d'une ou plusieurs vannes.

Dans ce cas, on force l'ouverture des vannes commandées 8, 21 et 28, et on force la vanne deux positions 27 de manière à ce qu'elle dirige le flux d'air passant par elle directement vers l'orifice de sortie 113 de la nacelle 100. La vanne anti-retour 6 est ouverte tandis que les vannes anti-retour 5 et 30 sont fermées.

Dans ce cas, le flux d'air provenant de la soufflante par le prélèvement soufflante 121 suit le même parcours que celui explicité dans la description de la figure 13, tandis que le flux d'air provenant du compresseur par le prélèvement compresseur 122 suit le même parcours que celui explicité dans la description de la figure 14.

Il est aussi possible d'envisager un quatrième réseau 1 dans lequel on a retiré le prélèvement compresseur. Ce type de réseau est mis en oeuvre quand l'air ayant traversé les échangeurs air / huile 2 et 3 est à une température suffisante pour dégivrer la lèvre d'entrée d'air 111, qui joue aussi le rôle d'échangeur air / air 4.

Dans tous les modes de réalisation décrits précédemment, l'orifice de sortie 113 peut être placé au niveau de la paroi aérodynamique interne 120 de la nacelle 100.

Dans les modes de réalisation où l'échangeur air / air 4 est installé dans la lèvre d'entrée d'air 111, l'air introduit dans l'échangeur air / air 4 effectue au moins une révolution le long de la circonférence de la lèvre d'entrée d'air 111 pour dégivrer l'ensemble de la lèvre d'entrée d'air 111 avant d'être évacué de l'échangeur air / air 4.

Les modes de réalisation décrits précédemment permettent de réduire de manière non négligeable la consommation globale de l'aéronef de 0,25% à 0,4% par rapport à un refroidissement par prélèvement uniquement dans la veine secondaire. Dans les cas où ils permettent de dégivrer la lèvre d'entrée d'air, ils permettent alors de réduire la température vue par la lèvre d'entrée d'air, réduisant ainsi les problèmes récurrents de fatigue, et par la zone amont de la paroi aérodynamique externe, la température de la dite zone ne dépassant alors pas la température maximale de l'huile d'une turbomachine, typiquement 180°C, permettant de réaliser la cloison avant de l'entrée d'air en aluminium plutôt qu'en titane.

Bien que l'invention ait été décrite avec des exemples particuliers de réalisation, il est bien évident qu'elle n'y est nullement limitée et qu'elle comprend tous les équivalents techniques des moyens décrits, ainsi que leurs combinaisons si celles-ci entrent dans le cadre de l'invention.

## Revendications

1. Nacelle (100) d'aéronef comprenant : une paroi aérodynamique externe (110) comprenant une lèvre d'entrée d'air (111) amont, une paroi aérodynamique interne (120), la lèvre d'entrée d'air (111) reliant en amont les deux parois aérodynamiques externe (110) et interne (120), une cloison avant située immédiatement à l'aval de la lèvre et reliant les deux parois aérodynamiques externe et interne, un réseau (1) de circulation d'un premier fluide de refroidissement d'un second fluide comprenant au moins deux échangeurs de chaleur de type air / huile (2, 3), au moins un échangeur de type air / air (4) **caractérisée en ce que** le réseau (1) de circulation comprend au moins une écope dynamique (112) de prélèvement d'air venant de l'extérieur de la nacelle (100), au moins un orifice (121) de prélèvement d'air froid venant d'une soufflante (130) et au moins un orifice de sortie (113) d'air hors de la nacelle (100).

2. Nacelle (100) selon la revendication 1 **caractérisée en ce que** l'échangeur de type air / air (4) est situé, au regard du parcours du premier fluide, entre les deux échangeurs de chaleur de type air / huile (2, 3).

3. Nacelle (100) selon l'une quelconque des revendications 1 ou 2 **caractérisée en ce que** l'échangeur de type air / air (4) est un échangeur surfacique présentant une surface d'échange (10).

4. Nacelle (100) selon la revendication 3 **caractérisée en ce que** la surface d'échange (10) est réalisée à partir de la paroi aérodynamique externe (110) de la nacelle (100).

5. Nacelle (100) selon l'une quelconque des revendications 3 ou 4 précédentes **caractérisée en ce que** l'échangeur de type air / air (4) comprend une paroi intermédiaire (15) percée d'une pluralité d'orifices (18).

6. Nacelle (100) selon l'une quelconque des revendications précédentes **caractérisée en ce que** l'échangeur de type air / air (4) présente un espace confiné (11), comprenant une entrée (12) et une sortie (13) du premier fluide, enfermé par des parois comprenant la surface d'échange (10) et une paroi périphérique(14).

7. Nacelle (100) selon l'une quelconque des revendications précédentes **caractérisée en ce que** le prélèvement soufflante alimente chacun des échangeurs air / huile (2/3)

8. Nacelle (100) selon l'une quelconque des revendications 6 ou 7 **caractérisée en ce que** l'espace confiné (11) est situé dans la lèvre d'entrée d'air (111).

9. Nacelle (100) selon l'une quelconque des revendications précédentes **caractérisée en ce qu'**elle comprend au moins un moyen commandé de prélèvement (122) d'air chaud venant d'un compresseur de l'aéronef de manière à permettre l'alimentation en air chaud de la lèvre d'entrée d'air (111) dans la zone comprise entre la paroi périphérique (14) et la paroi intermédiaire (15).

10. Nacelle (100) selon l'une quelconque des revendications précédentes **caractérisée en ce qu'**elle comprend au moins un injecteur haute pression commandé de manière à injecter de l'air chaud venant du moyen commandé de prélèvement (122) d'air chaud dans la lèvre d'entrée d'air (111).

11. Nacelle (100) selon l'une quelconque des revendications précédentes **caractérisée en ce que** la paroi aérodynamique externe (110) comprend au moins un orifice de sortie (113) du premier fluide réchauffé hors de la nacelle(100) après avoir traversé le réseau (1).

## Patentansprüche

1. Triebwerksgondel (100) eines Luftfahrzeugs, Folgendes umfassend:
eine aerodynamische Außenwand (110), eine stromaufwärts befindliche Lufteinlasslippe (111) umfassend, eine aerodynamische Innenwand (120), wobei die Lufteinlasslippe (111) stromaufwärts die aerodynamische Außenwand (110) und die aerodynamische Innenwand (120) miteinander verbindet, eine vordere Wand, die sich unmittelbar stromabwärts der Lippe befindet und die aerodynamische Außenwand und die aerodynamische Innenwand miteinander verbindet, ein Netz (1) zur Zirkulation einer ersten Flüssigkeit zum Kühlen einer zweiten Flüssigkeit, zumindest zwei Wärmetauscher des Typs Luft/Öl (2, 3) umfassend, zumindest einen Tauscher des Typs Luft/Luft (4), **dadurch gekennzeichnet, dass** das Netz (1) zur Zirkulation zumindest eine dynamische Hutze (112) zur Entnahme von Luft umfasst, die von außerhalb der Triebwerksgondel (100) kommt, zumindest eine Öffnung (121) zur Entnahme von kalter Luft, die aus einem Gebläse (130) kommt, und zumindest eine Auslassöffnung (113) für Luft aus der Triebwerksgondel (100).

2. Triebwerksgondel (100) nach Anspruch 1, **dadurch gekennzeichnet, dass** sich der Tauscher des Typs Luft/Luft (4) gegenüber dem Verlauf der ersten Flüssigkeit zwischen den beiden Wärmetauschern des Typs Luft/Öl (2, 3) befindet.

3. Triebwerksgondel (100) nach einem der Ansprüche 1 oder 2, **dadurch gekennzeichnet, dass** der Tauscher des Typs Luft/Luft (4) ein Flächentauscher ist, der eine Tauschfläche (10) aufweist.

4. Triebwerksgondel (100) nach Anspruch 3, **dadurch gekennzeichnet, dass** die Tauschfläche (10) ausgehend von der aerodynamischen Außenwand (110) der Triebwerksgondel (100) gebildet wird.

5. Triebwerksgondel (100) nach einem der vorherigen Ansprüche 3 oder 4, **dadurch gekennzeichnet, dass** der Tauscher des Typs Luft/Luft (4) eine Zwischenwand (15) umfasst, die mit einer Vielzahl von Bohrlöchern (18) versehen ist.

6. Triebwerksgondel (100) nach einem der vorherigen Ansprüche, **dadurch gekennzeichnet, dass** der Tauscher des Typs Luft/Luft (4) einen eingeschlossenen Raum (11), einen Einlass (12) und einen Auslass (13) für die erste Flüssigkeit umfassend, aufweist, der durch Wände, die Tauschfläche (10) und eine umlaufende Wand (14) umfassend, eingeschlossen ist.

7. Triebwerksgondel (100) nach einem der vorherigen Ansprüche, **dadurch gekennzeichnet, dass** die Gebläse-Entnahme jeden der Luft/Öl Tauscher (2/3) versorgt.

8. Triebwerksgondel (100) nach einem der Ansprüche 6 oder 7, **dadurch gekennzeichnet, dass** sich der eingeschlossene Raum (11) in der Lufteinlasslippe (111) befindet.

9. Triebwerksgondel (100) nach einem der vorherigen Ansprüche, **dadurch gekennzeichnet, dass** sie zumindest ein gesteuertes Mittel zur Entnahme (122) von warmer Luft umfasst, die aus einem Verdichter des Luftfahrzeugs stammt, um die Warmluftversorgung der Lufteinlasslippe (111) in der Zone zwischen der umlaufenden Wand (14) und der Zwischenwand (15) zu ermöglichen.

10. Triebwerksgondel (100) nach einem der vorherigen Ansprüche, **dadurch gekennzeichnet, dass** sie zumindest einen gesteuerten Hochdruckinjektor umfasst, um warme Luft, die aus dem gesteuerten Mittel zur Entnahme (122) von warmer Luft kommt, in die Lufteinlasslippe (111) zu injizieren.

11. Triebwerksgondel (100) nach einem der vorherigen Ansprüche, **dadurch gekennzeichnet, dass** die aerodynamische Außenwand (110) zumindest eine Auslassöffnung (113) für die erste erwärmte Flüssigkeit aus der Triebwerksgondel (100) heraus umfasst, nachdem sie das Netz (1) durchlaufen hat.

## Claims

1. An aircraft nacelle (100) comprising: an outer aerodynamic wall (110) comprising an upstream air inlet lip (111), an inner aerodynamic wall (120), the air inlet lip (111) connecting upstream both outer (110) and inner (120) aerodynamic walls, a front partition located immediately downstream of the lip and connecting both outer and inner aerodynamic walls, a network (1) for circulating a first coolant of a second fluid comprising at least two air/oil type heat exchangers (2, 3), at least one air/air type exchanger (4) **characterized in that** the circulating network (1) comprises at least one dynamic scoop (112) for bleeding air coming from outside the nacelle (100), at least one port (121) for bleeding cool air coming from a fan (130) and at least one port (113) for exit of the air out of the nacelle (100).

2. The nacelle (100) according to claim 1, **characterized in that** the air/air type exchanger (4) is located, opposite the path of the first fluid, between the two air/oil type heat exchangers (2, 3).

3. The nacelle (100) according to any one of claims 1 or 2, **characterized in that** the air/air type exchanger (4) is a surface exchanger having an exchange surface (10).

4. The nacelle (100) according to claim 3, **characterized in that** the exchange surface (10) is made from the outer aerodynamic wall (110) of the nacelle (100).

5. The nacelle (100) according to any one of the preceding claims 3 or 4, **characterized in that** the air/air type exchanger (4) comprises an intermediate wall (15) pierced by a plurality of ports (18).

6. The nacelle (100) according to any one of the preceding claims, **characterized in that** the air/air type exchanger (4) has a confined space (11), comprising an inlet (12) and an outlet (13) of the first fluid, enclosed by walls comprising the exchange surface (10) and a peripheral wall (14).

7. The nacelle (100) according to any one of the preceding claims, **characterized in that** the fan bleed supplies each of the air/oil exchangers (2/3).

8. The nacelle (100) according to any one of claims 6 or 7, **characterized in that** the confined space (11) is located in the air inlet lip (111).

9. The nacelle (100) according to any one of the preceding claims, **characterized in that** it comprises at least one controlled means (122) for bleeding hot air coming from a compressor of the aircraft so as to allow supplying the air inlet lip (111) with hot air in the area comprised between the peripheral wall (14) and the intermediate wall (15).

10. The nacelle (100) according to any one of the preceding claims, **characterized in that** it comprises at least one high pressure injector controlled so as to inject hot air coming from the controlled means (122) for bleeding hot air in the air inlet lip (111).

11. The nacelle (100) according to any one of the preceding claims, **characterized in that** the outer aerodynamic wall (110) comprises at least one port (113) for exit of the first heated fluid out of the nacelle (100) after having passed through the network (1).
